# EUROPEAN PATENT APPLICATION

(11) **EP 2 339 503 A1**
(43) Date of publication of application: **29.06.2011**
(21) Application number: 09180103.5
(22) Date of filing: 21.12.2009
(51) Int. Cl.: G06K 7/00, G06K 19/077

(54) **System and method for interrogating an RFID tag using an RFID reader**

(71) Applicant: NXP B.V., 5656 AG Eindhoven (NL)
(72) Inventor: Weidinger, Christian, Redhill, Surrey RH1 1DL (GB); Amtmann, Franz, Redhill, RH1 1DL (GB); Brandl, Roland, Redhill, RH1 1DL (GB)
(74) Representative: Hardingham, Christopher Mark

(57) **Abstract**

A system (100) and method for interrogating a radio frequency identification (RFID) tag (102; 300) using an RFID reader (104) involves checking by the RFID reader whether a particular feature is supported by the RFID tag and the status of the particular feature at the RFID tag and identifying by the RFID reader the RFID tag based on the checking of whether the particular feature is supported by the RFID tag and the checking of the status of the particular feature at the RFID tag.

## Description

Embodiments of the invention relate generally to electronics systems, more particularly, to a system and method for radio frequency identification (RFID).

An RFID system can be used for various applications. In an exemplary security monitoring application, an RFID tag is embedded into a product and the RFID tag is interrogated by an RFID reader for potential security breaches of the product.

Conventionally, an RFID reader uses a dedicated command set to check the status of an RFID tag. For example, an RFID reader that is manufactured by a particular manufacturer uses a command set that is specific to the particular manufacturer to check the status of an RFID tag. Consequently, each manufacturer has to individually develop and maintain its own command set. Therefore, there is a need to provide a system and method for interrogating an RFID tag using an RFID reader with a universal standard command.

A system and method for interrogating a radio frequency identification (RFID) tag using an RFID reader involves checking by the RFID reader whether a particular feature is supported by the RFID tag and the status of the particular feature at the RFID tag and identifying by the RFID reader the RFID tag based on the checking of whether the particular feature is supported by the RFID tag and the checking of the status of the particular feature at the RFID tag. The checking of whether the particular feature is supported by the RFID tag and the status of the particular feature at the RFID tag may include sending at least one universal standard command from the RFID reader to the RFID tag. By using at least one universal standard command at the RFID reader to interrogate the RFID tag, each manufacturer does not have to individually develop and maintain its own command set.

In an embodiment, a method for interrogating an RFID tag using an RFID reader involves checking by the RFID reader whether a particular feature is supported by the RFID tag, checking by the RFID reader the status of the particular feature at the RFID tag, and identifying by the RFID reader the RFID tag based on the checking of whether the particular feature is supported by the RFID tag and the checking of the status of the particular feature at the RFID tag.

In an embodiment, an RFID tag includes a computer readable medium, a dedicated memory, a status checking unit and an execution unit. The computer readable medium is configured to store identification information of the RFID tag, the identification information including information indicating that the RFID tag is configured to support a particular feature. The dedicated memory is configured to store the status of the particular feature. The status checking unit is configured to check the status of the particular feature stored in the dedicated memory. The execution unit is configured to change the status of the particular feature stored in the dedicated memory or trigger an action on the RFID tag.

An RFID system includes an RFID tag and an RFID reader. The RFID tag includes a computer readable medium, a dedicated memory, a status checking unit and an execution unit. The computer readable medium is configured to store identification information of the RFID tag, the identification information including information indicating that the RFID tag is configured to support a particular feature. The dedicated memory is configured to store the status of the particular feature. The status checking unit is configured to check the status of the particular feature stored in the dedicated memory. The execution unit is configured to change the status of the particular feature stored in the dedicated memory or trigger an action on the RFID tag. The RFID reader is configured to check whether the particular feature is supported by the RFID tag, to check the status of the particular feature at the RFID tag, and to identify the RFID tag based on the checking of whether the particular feature is supported by the RFID tag and the checking of the status of the particular feature at the RFID tag.

Other aspects and advantages of embodiments of the present invention will become apparent from the following detailed description, taken in conjunction with the accompanying drawings, depicted by way of example of the principles of the invention.
Fig. 1 shows a schematic block diagram of an RFID system in accordance with an embodiment of the invention.
Fig. 2 depicts exemplary identification information of an RFID tag of the RFID system of Fig. 1.
Fig. 3 depicts an exemplary RFID tag.
Fig. 4 illustrates an exemplary tag memory of the RFID tag of Fig. 3.
Fig. 5 shows an exemplary status word of the RFID tag of Fig. 3.
Fig. 6 is a process flow diagram of a method for interrogating an RFID tag using an RFID reader in accordance with an embodiment of the invention.

Throughout the description, similar reference numbers may be used to identify similar elements.

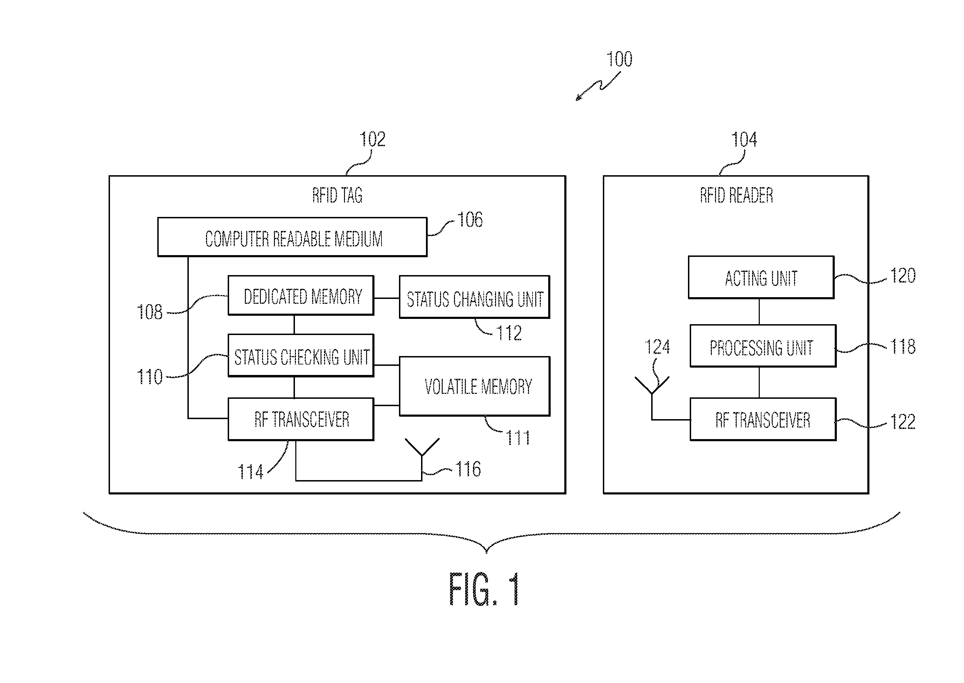

Fig. 1 shows a schematic block diagram of an RFID system 100 in accordance with an embodiment of the invention. The RFID system can be used in various applications such as security monitoring, object tracking and location marking. In some embodiments, the RFID system is used for electronic article surveillance (EAS) to prevent an unauthorized removal of an article from a facility such a retail store or a library. In the embodiment of Fig. 1, the RFID system includes an RFID tag 102 and an RFID reader 104.

The RFID tag 102 of the RFID system 100 includes a computer readable medium 106, a dedicated memory 108, a status checking unit 110, a volatile memory 111, an execution unit 112, an RF transceiver 114 and an antenna 116. The computer readable medium of the RFID tag is configured to store identification information of the RFID tag. The identification information of the RFID tag includes information indicating that the RFID tag is configured to support a particular feature, for example, EAS, privacy, memory access control, sensing, security, additional interface, and anti-collision. The computer readable medium can be any type of a storage device. Examples of a computer readable medium include a semiconductor or solid state memory or a read-only memory (ROM). In some embodiments, the RFID tag is configured to support EAS and the identification information of the RFID tag includes information indicating that the RFID tag is configured to support EAS. For example, the RFID tag is attached to an article such that the EAS of the article is supported by the RFID tag.

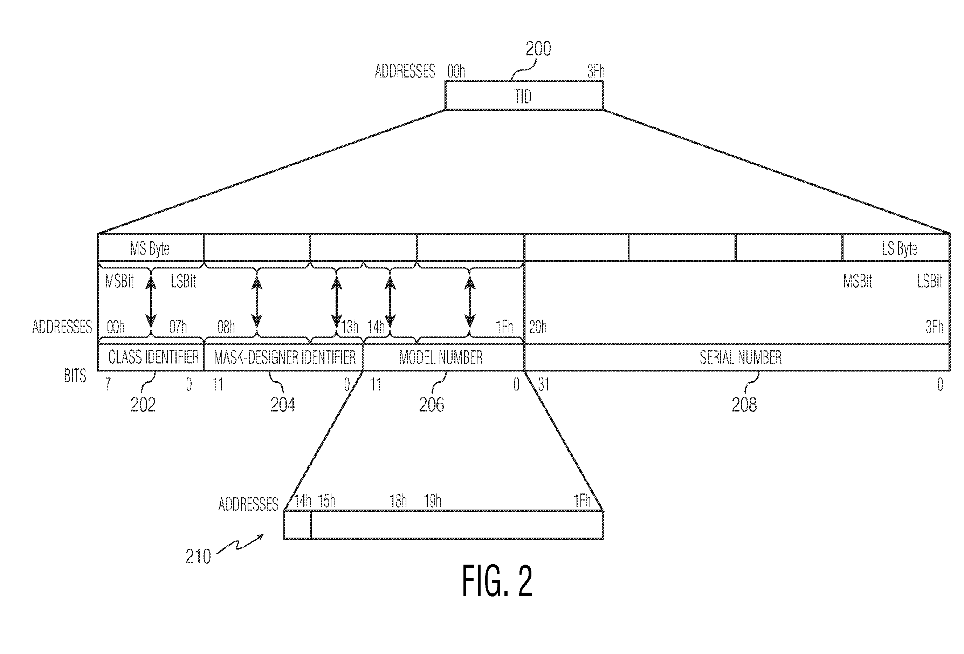

In some embodiments, the RFID tag 102 is uniquely identified by the identification information. In other words, the RFID tag is unambiguously identified by the identification information. Exemplary identification information of the RFID tag is depicted in Fig. 2. In the embodiment of Fig. 2, the exemplary identification information of the RFID tag is the tag identifier or transponder identifier (TID) 200 of the RFID tag, which includes a class identifier 202, a mask-designer-identifier 204, a model number 206 and a serial number 208 of the RFID tag. The TID may be a TID in accordance with EPCglobal EPC Generation 2 (Gen 2) standard. As shown in Fig. 2, the class identifier, the mask-designer-identifier, the model number and the serial number of the RFID tag are located in a direction from the most significant (MS) byte of the TID to the least significant (LS) byte of the TID. The TID is located between addresses [00h] and [3Fh] while the class identifier is located between addresses [00h] and [07h], the mask-designer-identifier is located between addresses [08h] and [13h], the model number is located between addresses [14h] and [1Fh], and the serial number is located between addresses [20h] and [3Fh].

The class identifier 202 and the mask-designer-identifier 204 of the RFID tag 102 may be an identifier according to the EPCglobal EPC Gen 2 standard. The mask-designer-identifier of the RFID tag identifies the integrate circuit (IC) design house of the RFID tag. The mask-designer-identifier is similar to a manufacturer code as in International Organization for Standardization (ISO) 15963 with the difference that different manufacturers may sell ICs designed in the same design house. The model number 206 of the RFID tag reveals the model of the RFID tag. As shown in Fig. 2, the model number includes a feature indicator bit 210 that is located in the most significant bit of the model number at address [14h] and shows that the RFID tag is configured to support a particular feature.

Turning back to Fig. 1, the dedicated memory 108 of the RFID tag 102 is configured to store the status of a particular feature. The status of the particular feature may be "ON" or "OFF." In some embodiments, the dedicated memory is a factory locked memory. The RFID tag may further include an electronic product code (EPC) memory (not shown) and the factory locked memory may be located within the EPC memory.

The status checking unit 110 of the RFID tag 102 is configured to check the status of the particular feature that is stored in the dedicated memory 108. In some embodiments, the status checking unit is further configured to check the identification information and/or the status of the particular feature to generate a checking result and to set the state of the RFID tag based on the checking result, where the state of the RFID tag indicates whether the particular feature is supported by the RFID tag and the status of the particular feature. The volatile memory 111 of the RFID tag is configured to store the state of the RFID tag. The status checking unit may use a standard read command to check the status of the particular feature stored in the dedicated memory. In some embodiments, the status checking unit is further configured to respond to a command from the RFID reader 104 by checking the status of the EAS and setting the state of the RFID tag based on the checking. The state of the RFID tag may be the SL flag of the RFID tag according to the EPCglobal EPC Generation 2 standard. The command may be a manufacturer-specific command or a standard command that is universal for different manufacturers. The standard command may be a standard select command according to the EPCglobal EPC Gen 2 standard, which is specified as a mandatory command in the EPCglobal EPC Gen 2 standard and is available at every RFID reader that is in compliance with the EPCglobal EPC Gen 2 standard.

The execution unit 112 of the RFID tag 102 is configured to change the status of the particular feature that is stored in the dedicated memory 108 or trigger an action on the RFID tag. In some embodiments, the execution unit is further configured to access a factory locked memory in the RFID tag that stores the status of the particular feature using a password and to change the status of the particular feature stored in the factory locked memory triggered by a custom specific command of the RFID tag. The execution unit may trigger an action on the RFID tag with or without access control. In some embodiments, the execution unit triggers an action on the RFID tag based on the status of the particular feature. For example, the execution unit reads out sensor data, which is gathered by a sensor (not shown) that is integrated in the RFID tag, if a specific bit in a status word of the particular feature is set to one. In this example, the execution unit may also declare the sensor data valid while setting the specific bit in the status word of the particular feature back to zero.

The RF transceiver 114 of the RFID tag 102 is configured to transmit outgoing signals and to receive incoming signals using the antenna 116 of the RFID tag. The transceiver may include a medium access control (MAC) unit (not shown) configured to schedule outgoing and incoming communications, a modulator (not shown) configured to modulate the outgoing signals and a demodulator (not shown) configured to demodulate the incoming signals. The antenna of the RFID tag may be a flat printed circuit board (PCB) antenna such that the RFID tag can be integrated in a single IC chip.

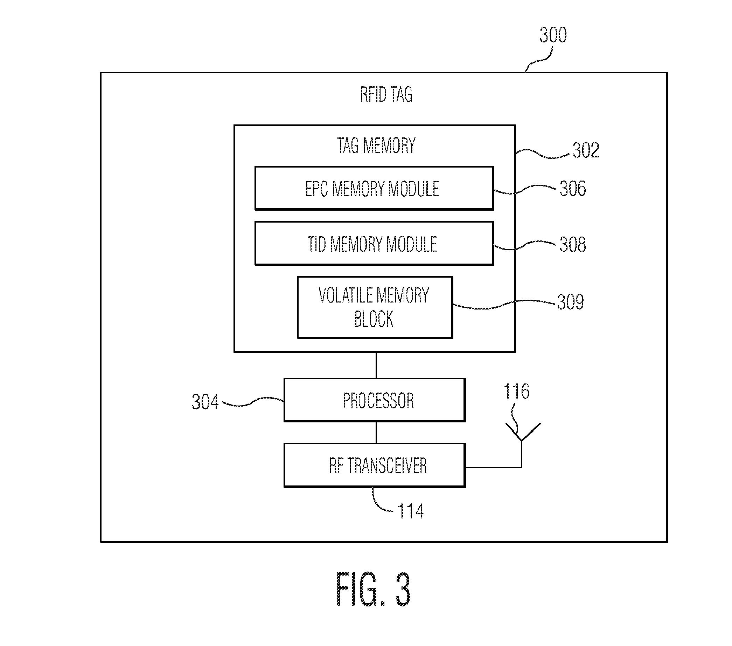

In some embodiments, the computer readable medium 106 and the dedicated memory 108 of the RFID tag 102 are implemented in a factory locked memory. The factory locked memory may be only accessible to the RFID tag by custom specific commands that are provided by the manufacturer of the RFID tag. Additionally, the status checking unit 110 and the execution unit 112 of the RFID tag may be implemented as software instructions that are stored in a computer readable medium and are executed by a processor or hardware that is built into a processor. Fig. 3 depicts an exemplary RFID tag 300 that includes a tag memory 302, a processor 304, an RF transceiver 114 and an antenna 116.

The tag memory 302 of the exemplary RFID tag 300 may be a semiconductor or solid state memory. As shown in Fig. 3, the tag memory includes an EPC memory bank 306, a TID memory bank 308 and a volatile memory block 309, which are located in different address ranges within the tag memory. The EPC memory bank of the tag memory is configured to store an electronic product code (EPC) of the RFID tag. The EPC memory bank of the RFID tag contains information that indicates the status of a particular feature that is supported by the RFID tag. The EPC may identify an object to which the RFID tag is affixed. For example, if the RFID tag is attached to an article for EAS, the EPC of the RFID tag identifies the attached article of the RFID tag. The TID memory bank of the tag memory is configured to store the TID of the RFID tag, which includes information indicating that the RFID tag is configured to support the particular feature. The TID of the RFID tag may be same or similar to the TID 200 described with respect to Fig. 2. The volatile memory block 309, which can store information at least two seconds unpowered, is configured to store the state of the RFID tag.

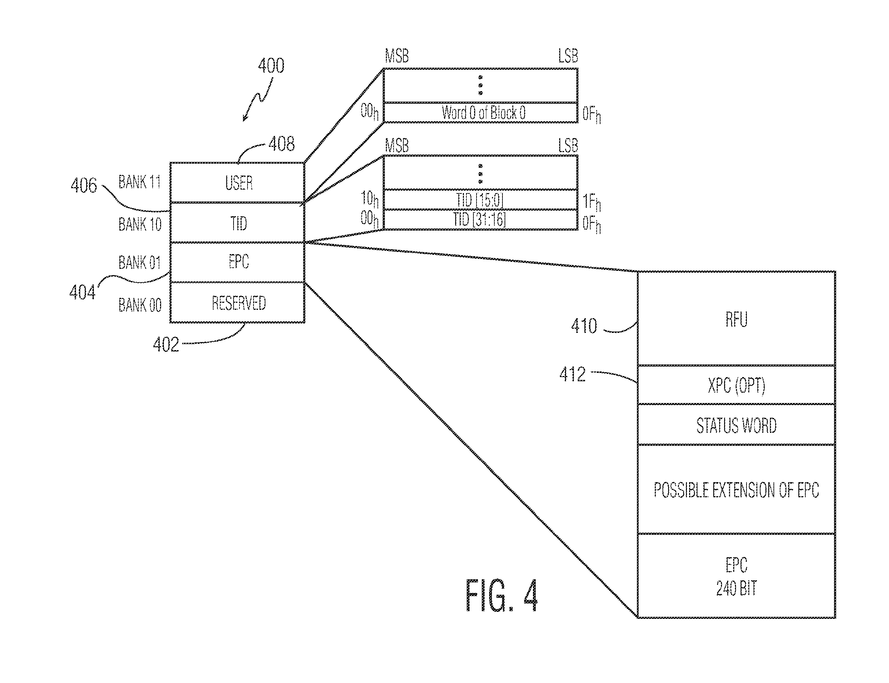

In some embodiments, the TID memory bank 306 and the EPC memory bank 308 are located in isolated portions of the tag memory 302. Alternatively, the TID memory bank and the EPC memory bank may be located in adjacent memory addresses of the tag memory. An exemplary tag memory 400 is illustrated in Fig. 4. In the embodiment of Fig. 4, the tag memory includes a reserved memory bank 402, an EPC memory bank 404, a TID memory bank 406 and a user memory bank 408, which are addressed by "00," "01," "10" and "11," respectively.

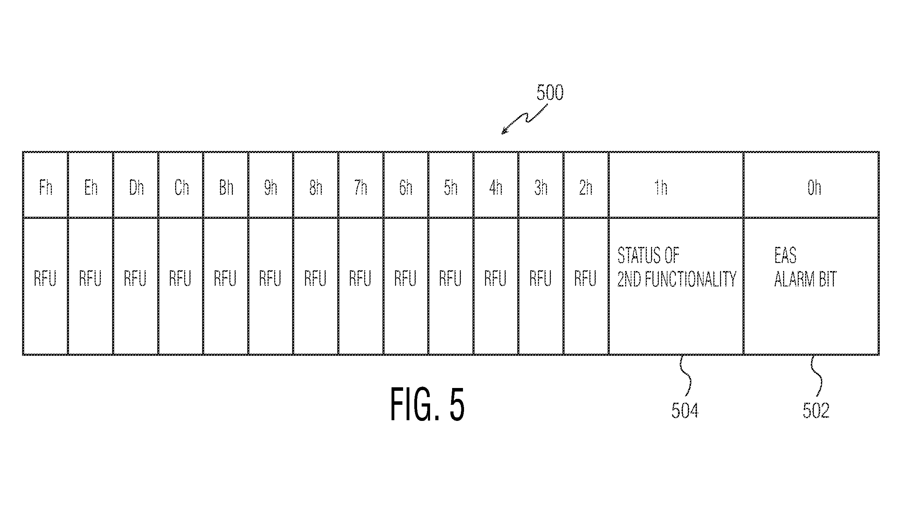

The EPC memory bank 404 of the tag memory 400 stores a status word that describes the status of the particular feature supported by the RFID tag 300 and the EPC of the RFID tag that identifies an object to which the RFID tag is affixed. In the embodiment of Fig. 4, the EPC memory bank 404 also includes a Reserved for Further Use (RFU) memory block 410 for future usages such as higher class specifications of RFID tags and an Extended Protocol Control (XPC) memory block 412 to store XPC words. An exemplary status word 500 is depicted in Fig. 5 for an EAS enabled RFID tag. As shown in Fig. 5, the exemplary status word includes at least sixteen bits, which are in the address range of [0h]-[Fh]. An EAS alarm bit 502 is located in the address [0h] and contains information about the EAS status of the EAS supported RFID tag. In some embodiments, the EAS status of the RFID tag is positive if the EAS alarm bit is set to zero and the EAS status of the RFID tag is negative if the EAS alarm bit is set to one. Alternatively, the EAS status of the RFID tag may be negative if the EAS alarm bit is set to zero and the EAS status of the RFID tag may be positive if the EAS alarm bit is set to one in other embodiments. A second feature status bit 504 is located in the address [1h] and contains information about the status of a second feature. Additionally, bits that are located in the address range of [2h]-[Fh] are reserved for further use.

Turning back to Fig. 4, the TID memory bank 406 of the tag memory 400 may be same or similar to the TID memory bank 308 described above with respect to Fig. 3. The user memory bank 408 of the tag memory is configured to store user-specific data of the RFID tag.

Turning back to Fig. 3, the processor 304 of the exemplary RFID tag 300 is configured to check the status of a particular feature supported by the RFID tag and to change the status of the particular feature or trigger an action on the RFID tag. In other words, the processor is configured to perform equivalent functions of the status checking unit 110 and the execution unit 112 described above with respect to Fig. 1. The processor may be any type of processing device such as a multifunction processor or an application-specific processor. The processor may execute software instructions that are stored in a computer readable medium (not shown) or include built-in hardware.

Turning back to Fig. 1, the RFID reader 104 of the RFID system 100 is configured to check whether the particular feature is supported by the RFID tag 102, to check the status of the particular feature at the RFID tag, and to identify the RFID tag based on the checking of whether the particular feature is supported by the RFID tag and the checking of the status of the particular feature at the RFID tag. In some embodiments, at least one of the checking of whether the particular feature is supported by the RFID tag and the checking of the status of the particular feature at the RFID tag includes sending a command from the RFID reader to the RFID tag. The command may be a standard select command according to EPCglobal EPC Generation 2 standard. For example, the RFID reader sends a standard select command to the RFID tag such that the state of the RFID tag is changed at the RFID tag in response to the command. The RFID reader 104 may determine whether the RFID tag is configured to support the particular feature and the status of the particular feature, for example, by sending standard select commands to the RFID tag. Alternatively, the RFID tag may send information that indicates whether the particular feature is supported by the RFID tag and/or the status of the particular feature at the RFID tag back to the RFID reader without setting its state.

In the embodiment of Fig. 1, the RFID reader is further configured to trigger an action if the status of the particular feature is determined to be positive. In some embodiments, the particular feature is electronic article surveillance (EAS) and the RFID reader is configured to trigger an EAS alarm if the status of the EAS is positive. In an example, a positive EAS status of the RFID tag means that the EAS feature is activated in the RFID tag and a negative EAS status of the RFID tag means that the EAS feature is deactivated in the RFID tag. As shown in Fig. 1, the RFID reader includes a processing unit 118, an acting unit 120, a transceiver 122 and an antenna 124. The RFID reader may include an optional display (not shown), which can be any type of a display such as a computer monitor or a television panel.

The processing unit 118 of the RFID reader 104 is configured to send a command such as a standard select command according to the EPCglobal EPC Gen 2 standard using the transceiver 122 and the antenna 124 of the RFID reader to the RFID tag 102 and to receive a response to the select command from the RFID tag indicating whether the RFID tag is configured to support the particular feature and the status of the particular feature using the transceiver and the antenna of the RFID reader. The processing unit may be any type of processing device such as a multifunction processor or an application-specific processor.

The acting unit 120 of the RFID reader 104 is configured to trigger an action if the status of the particular feature is positive. The acting unit may include a sound alarm (not shown) and/or a light alarm (not shown). The transceiver 122 of the RFID reader may be similar to or identical with the transceiver 114 of the RFID tag 102. The antenna 124 of the RFID reader may be a loop antenna for a large communications range or a flat PCB antenna such that the RFID reader can be integrated in a single IC chip.

Although the RFID system 100 is shown in Fig. 1 as including an RFID tag 102 that is configured to support a particular feature, the RFID system may further include one or more RFID tags that are configured to support the particular feature. In this case, the RFID reader 104 uses the standard select command according to the EPCglobal EPC Gen 2 standard to select a subset of the entire population of the RFID tags in the RFID system, which is configured to support the particular feature. Then the RFID reader may identify this subset of RFID tags for inventory purposes using the anti-collision command set according to the EPCglobal EPC Gen 2 standard. The anti-collision command set includes standard commands such as Query, Query Repeat, QueryAdjust, Acknowledge and NAK. The anti-collision works in a timeslot base, where an RFID tag randomly chooses a response timeslot and a short random number as temporary identifier (ID) to save time. If the random ID is known, the RFID reader retrieves the EPC of the RFID tag using a standard Acknowledge command.

In an exemplary operation of the RFID system 100, the RFID reader 104 uses a suitable sequence of EPCglobal Gen 2 mandatory commands to filter the entire population of the RFID tags in the RFID system for RFID tags with their EAS Alarm bits set to "1" or positive and to get their EPCs. In a first step, the RFID reader sends the standard select command according to the EPCglobal EPC Gen 2 standard to the entire population of the RFID tags in the RFID system with the following parameters: MemBank: 10h (the TID memory bank 308 or 406), Action: 000b (set tag SL flag if matching else reset tag SL flag) Pointer: 00h (start at address "0" of the TID memory bank), Masklength: 15h (compare 21 bits) and Mask: E20068h (use this mask starting from the MSB to compare with the content of the TID memory bank). In this first step, the RFID reader checks the TIDs 200 of the RFID tags to detect RFID tags that are configured to support EAS by matching a portion of the TID, which indicates whether the EAS is supported by the RFID tag, with a predefined value. For example, the predefined value includes the class identifier 0xE2, the mask-designer-identifier 0x006 and the flag for EAS. If the portion of the TID, which indicates whether the EAS is supported by the RFID tag, matches the predefined value, the RFID tag asserts or sets its selected flag (SL). If the portion of the TID, which indicates whether the EAS is supported by the RFID tag, does not match the predefined value, the RFID tag deasserts or resets its SL flag. In a second step, the RFID reader sends the standard select command according to the EPCglobal EPC Gen 2 standard to previously selected or matched RFID tags with the following parameters MemBank: 01h (the EPC Memory bank 306 or 404), Action: 010b (reset SL flag if not matching), Pointer: 200h (start at address 200h of the EPC memory where the EAS Alarm bit is located at), Masklength: 01h (compare one bit) and Mask: 1b (compare to binary 1). In this second step, the RFID reader checks whether the EAS Alarm bit 502 in the exemplary status word 500 of an RFID tag is positive or equal to "1." If the EAS Alarm bit of the RFID tag is not positive, the RFID tag deasserts or resets its SL flag. After the first step and the second step, the RFID tags in the entire population of the RFID tags in the RFID system whose SL flags are set are the RFID tags with positive EAS Alarm bits. In a third step, the RFID reader retrieves the EPCs of the RFID tags with positive EAS Alarm bits with the anti-collision command set according to the EPCglobal EPC Gen 2 standard. In summary, only the RFID tags with their EAS Alarm bits set to "1" out of the entire population of the RFID tags in the RFID system are recognized and identified.

Alternatively, the third step can be performed before the execution of the first and second steps. In other words, the entire population of the RFID tags in the RFID system is identified first and then the RFID tags with their EAS Alarm bits set to "1" are recognized. However, compared to the above-described exemplary operation, identifying the entire population of the RFID tags in the RFID system would take much more time and the probability of failing to spot a RFID tag would be higher.

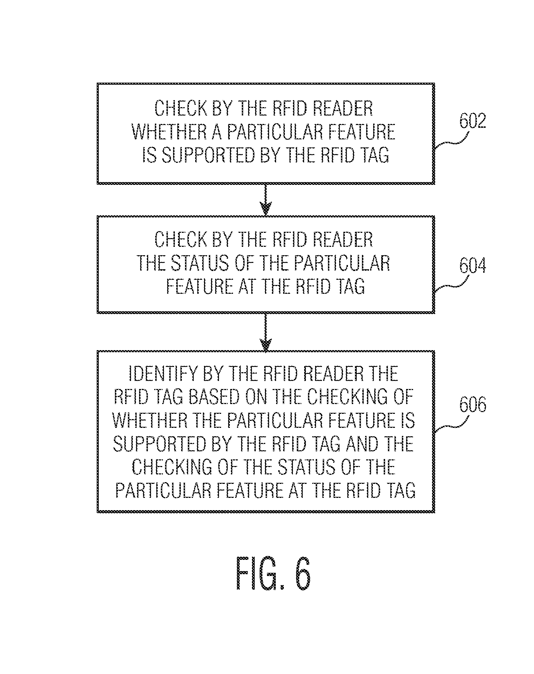

Fig. 6 is a process flow diagram of a method for interrogating an RFID tag using an RFID reader in accordance with an embodiment of the invention. At block 602, whether a particular feature is supported by the RFID tag is checked by the RFID reader. At block 604, the status of the particular feature at the RFID tag is checked by the RFID reader. At block 606, the RFID tag is identified by the RFID reader based on the checking of whether the particular feature is supported by the RFID tag and the checking of the status of the particular feature at the RFID tag.

Although the operations of the method herein are shown and described in a particular order, the order of the operations of the method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

In addition, although specific embodiments of the invention that have been described or depicted include several components described or depicted herein, other embodiments of the invention may include fewer or more components to implement less or more feature.

Furthermore, although specific embodiments of the invention have been described and depicted, the invention is not to be limited to the specific forms or arrangements of parts so described and depicted. The scope of the invention is to be defined by the claims appended hereto and their equivalent.

## Claims

1. A method for interrogating a radio frequency identification (RFID) tag (102; 300) using an RFID reader (104), the method comprising:
checking (602) by the RFID reader whether a particular feature is supported by the RFID tag;
checking (604) by the RFID reader the status of the particular feature at the RFID tag; and
identifying (606) by the RFID reader the RFID tag based on the checking of whether the particular feature is supported by the RFID tag and the checking of the status of the particular feature at the RFID tag.

2. The method of claim 1, wherein at least one of the checking (602) of whether the particular feature is supported by the RFID tag (102; 300) and the checking of the status of the particular feature at the RFID tag includes sending a command from the RFID reader (104) to the RFID tag, and wherein the command is a standard select command according to EPCglobal EPC Generation 2 standard.

3. The method of claim 1 further comprising:
storing identification information (200) of the RFID tag (102; 300) in a computer readable medium (106; 308; 406) of the RFID tag, the identification information comprising information (210) indicating that the RFID tag is configured to support the particular feature;
storing status of the particular feature in a dedicated memory (108) of the RFID tag;
checking the identification information at the RFID tag; and
changing the status of the particular feature at the RFID tag or triggering an action on the RFID tag.

4. The method of claim 3, wherein the particular feature is electronic article surveillance (EAS) and the RFID tag (102; 300) is uniquely identified by the identification information (200).

5. The method of claim 1 further comprising triggering an action by the RFID reader (104) if the status of the particular feature is positive.

6. The method of claim 2 further comprising:
checking by the RFID tag (102; 300) whether the particular feature is supported by the RFID tag and/or the status of the particular feature at the RFID tag in response to the command; and
setting the state of the RFID tag at the RFID tag based on the checking by the RFID tag, wherein the state of the RFID tag is the SL flag of the RFID tag according to the EPCglobal EPC Generation 2 standard.

7. A radio frequency identification (RFID) tag (102; 300), the RFID tag comprising:
a computer readable medium (106) configured to store identification information (200) of the RFID tag, the identification information comprising information (500) indicating that the RFID tag is configured to support a particular feature;
a dedicated memory (108) configured to store the status of the particular feature;
a status checking unit (110) configured to check the status of the particular feature stored in the dedicated memory; and
an execution unit (112) configured to change the status of the particular feature stored in the dedicated memory or trigger an action on the RFID tag.

8. The RFID tag (102; 300) of claim 7, wherein the particular feature is electronic article surveillance (EAS).

9. The RFID tag (102; 300) of claim 8, wherein the status checking unit (110) is further configured to respond to a command from an RFID reader (104) by checking the status of the EAS and setting the state of the RFID tag based on the checking.

10. The RFID tag (102; 300) of claim 9, wherein the command is a standard select command according to EPCglobal EPC Generation 2 standard, and wherein the state of the RFID tag is the SL flag of the RFID tag according to the EPCglobal EPC Generation 2 standard.

11. The RFID tag (102; 300) of claim 8, wherein the RFID tag is attached to an article such that the EAS of the article is supported by the RFID tag.

12. The RFID tag (102; 300) of claim 7, wherein the RFID tag is uniquely identified by the identification information (200).

13. The RFID tag (102; 300) of claim 12, wherein the identification information (200) of the RFID tag comprises a class identifier (202), a mask-designer-identifier (204), a model number (206) and a serial number (208) of the RFID tag.

14. The RFID tag (102; 300) of claim 12, wherein the dedicated memory (108) is a factory locked memory.

15. The RFID tag (102; 300) of claim 14, wherein the RFID tag further comprises an electronic product code (EPC) memory (404) and wherein the factory locked memory is located within the EPC memory.

16. A radio frequency identification (RFID) system (100), the RFID system comprising:
an RFID tag (102; 300) comprising:
a computer readable medium (106) configured to store identification information (200) of the RFID tag, the identification information comprising information (500) indicating that the RFID tag is configured to support a particular feature;
a dedicated memory (108) configured to store the status of the particular feature;
a status checking unit (110) configured to check the status of the particular feature stored in the dedicated memory; and
an execution unit (112) configured to change the status of the particular feature stored in the dedicated memory or trigger an action on the RFID tag; and
an RFID reader (104) configured to check whether the particular feature is supported by the RFID tag, to check the status of the particular feature at the RFID tag, and to identify the RFID tag based on the checking of whether the particular feature is supported by the RFID tag and the checking of the status of the particular feature at the RFID tag.

17. The RFID system (100) of claim 16, wherein the RFID reader (104) is further configured to send a command to the RFID tag (102; 300) such that the state of the RFID tag is set at the RFID tag in response to the command, wherein the command is a standard select command according to EPCglobal EPC Generation 2 standard, wherein the state of the RFID tag indicates whether the RFID tag is configured to support the particular feature and the status of the particular feature, and wherein the state of the RFID tag is the SL flag of the RFID tag according to the EPCglobal EPC Generation 2 standard.

18. The RFID system (100) of claim 17, wherein the status checking unit (110) is further configured to respond to the standard select command from the RFID reader (104) by checking the status of the particular feature and setting the SL flag of the RFID tag (102; 300) based on the checking of the status of the particular feature.

19. The RFID system (100) of claim 18, wherein the particular feature is electronic article surveillance (EAS) and wherein the RFID reader (106) is configured to trigger an EAS alarm if the status of the EAS is determined to be positive.

20. The RFID system (100) of claim 16, wherein the RFID tag (102; 300) is uniquely identified by the identification information (200).
